# EUROPÄISCHE PATENTSCHRIFT

(11) **EP 0 631 067 B1**
(45) Veröffentlichungstag und Bekanntmachung des Hinweises auf die Patenterteilung: **18.09.1996**
(21) Anmeldenummer: 94109672.9
(22) Anmeldetag: 22.06.1994
(51) Int. Cl.: F16G 1/22, B65G 15/42

(54) **Riemen**
Belt
Courroie

(30) Priorität: 24.06.1993 DE 4320974
(43) Veröffentlichungstag der Anmeldung: 28.12.1994
(73) Patentinhaber: NORDDEUTSCHE SEEKABELWERKE AKTIENGESELLSCHAFT, D-26954 Nordenham (DE)
(72) Erfinder: Basse, Hartwig, D-26954 Nordenham (DE)
(74) Vertreter: Möller, Friedrich, Dipl.-Ing.

(56) Entgegenhaltungen:
- DE-C- 36 568
- DE-C- 100 932
- DE-C- 323 713
- FR-A- 394 141
- GB-A- 606 107
- US-A- 2 598 829

## Beschreibung

Die Erfindung betrifft einen Riemen nach dem Oberbegriff des Patentanspruchs 1. Riemen dieser Art finden Verwendung als Treibriemen oder als Transportriemen insbesondere zum Stückguttransport.

Bei bekannten Riemen dieser Art (DE-C-36568, DE-C-100932) dient ein Hüllkörper, der die Mantelfläche eines Grundkörpers umgibt, als Profilierung.

Die DE-C-100932 befaßt sich mit einer als Riemen dienenden Treibschnur, bei der eine als Grundkörper ausgebildete endlose Seele von einem Hüllkörper, nämlich einer Kautschukhülle, umgeben ist. Auf der Kautschukhülle sind voneinander beabstandet kugelförmige Verdickungen angeordnet. Die durch die kugelförmigen Verdickungen gebildete Profilierung ist nicht mit dem Grundkörper in Kontakt. Die Herstellung dieser Treibschnur ist mit hohem Aufwand verbunden.

Die DE-C-36568 zeigt einen Seilkern aus Baumwolle oder dergleichen, der durch eine Drahthülse umgeben ist und durch Vernähen mit dieser fest verbunden ist. Das Vernähen der Drahthülse mit dem Grundkörper erfordert einen hohen Herstellungsaufwand.

Der Erfindung liegt die Aufgabe zugrunde, einen Riemen der eingangs erwähnten Art zu schaffen, der die Übertragung hoher Kräfte (Antriebs- bzw. Förderkräfte) zuläßt und zudem mit geringem Aufwand herstellbar ist.

Erfindungsgemäß wird diese Aufgabe durch einen Riemen mit den Merkmalen des Anspruchs 1 gelöst. Der Hüllkörper ist als separater Netzschlauch mit wenigstens zwei sich kreuzenden Strängen ausgebildet. Durch die Netzstruktur des Hüllkörpers ist eine wirkungsvolle Profilierung des Riemens möglich, die eine Übertragung relativ großer Kräfte zuläßt. Außerdem läßt sich der Netzschlauch und damit die Profilierung einfach herstellen.

In einer vorteilhaften Ausgestaltung der Erfindung ist der Hüllkörper nicht mit dem Grundkörper verbunden. Der netzschlauchartige, separate Hüllkörper braucht nur in einfacher Weise auf den Grundkörper des Riemens aufgeschoben zu werden.

Die sich kreuzenden Stränge sind vorzugsweise an allen gemeinsamen Kreuzungsstellen miteinander verbunden, so daß der Hüllkörper mit guter Eigenstabilität ausbildbar ist, was ferner zum einen die Kraftübertragung begünstigt und zum anderen die Anordnung des Hüllkörpers auf dem Grundkörper des Riemens erleichtert.

Dadurch, daß nach einem weiteren Aspekt der Erfindung die Stränge in unterschiedlichen Lagen angeordnet sind und sich vorzugsweise die Stränge der einen Lage mit denen der anderen Lage kreuzen, weist der Hüllkörper eine Dicke auf, die etwa der Dicke beider Lagen eintspricht, wodurch die Ausbildung einer wirkungsvollen Profilierung zusätzlich begünstigt wird.

Im Sinne der Erfindung ist es ferner, daß die Stränge der jeweiligen Lagen voneinander beabstandet sind, so daß der Hüllkörper tiefe Ausnehmungen und dadurch eine ausgeprägte Profilierung aufweist. Die Ausnehmungen können mit korrespondierenden Oberflächengestaltungen des zu transportierenden Stückguts, aber auch der den Riemen antreibenden Riemenscheibe zusammenwirken. Wegen des möglichen zusätzlichen Formschlusses der genannten Elemente ist die Kraftübertragung weiter verbessert.

In besonderer Ausgestaltung der Erfindung ist der Hüllkörper ein Schlauch, der zur Ausbildung der Profilierung mit außenseitigen Vorsprüngen und/oder Vertiefungen versehen ist. Hierdurch ist der Grundkörper des Riemens mit einer wirkungsvollen Profilierung versehen und außerdem stets vollständig abgedeckt und somit gegen äußere Einwirkungen weitestgehend geschützt.

Weiterhin ist vorgesehen, den Hüllkörper gegenüber dem Grundkörper im Durchmesser kleiner auszubilden. Dadurch wird eine Relativbewegung zwischen Grundkörper und Hüllkörper ohne eine Verbindung derselben weitestgehend ausgeschlossen, indem der Hüllkörper den Grundkörper mit Vorspannung umgibt. Auf diese Weise wird die Übertragung größerer Kräfte ohne eine direkte Verbindung des Hüllkörpers mit dem Grundkörper unterstützt. Zum besseren Halt des Hüllkörpers auf dem Grundkörper kann alternativ oder zusätzlich der Hüllkörper mit dem Grundkörper ganz oder bereichsweise verbunden sein, beispielsweise durch eine thermische Verbindung beider Körper.

Schließlich kann der Riemen über einen Hüllkörper verfügen, dessen Materialeigenschaften sich von denen des Grundkörpers mindestens teilweise unterscheiden. Vorzugsweise verfügt das Material des Hüllkörpers über einen höheren Reibungswiderstand und/oder eine geringere Härte als das Material des Grundkörpers. Dadurch ist ein hoher Reibungswiderstand des Riemens erreichbar, ohne daß dessen Zugfestigkeit nachteilig beeinträchtigt wird.

Weitere Merkmale der Erfindung und deren Vorteile ergeben sich aus den übrigen Ansprüchen und der Beschreibung.

Bevorzugte Ausführungsbeispiele der Erfindung werden nachfolgend anhand der Zeichnung näher erläutert. In der Zeichnung zeigen:
- Fig. 1: eine Ansicht eines Riemens in schematischer und teilweiser Darstellung,
- Fig. 2: den Schnitt II-II des Riemens nach Fig. 1,
- Fig. 3: ein zweites Ausführungsbeispiel eines Riemens in einer Ansicht analog zu Fig. 1,
- Fig. 4: ein drittes Ausführungsbeispiel eines Riemens in einer Ansicht analog zu Fig. 1,
- Fig. 5: ein viertes Ausführungsbeispiel eines Riemens in einer Ansicht analog zu Fig. 1 und
- Fig. 6: ein fünftes Ausführungsbeispiel eines Riemens in einer Ansicht analog zu Fig. 1.

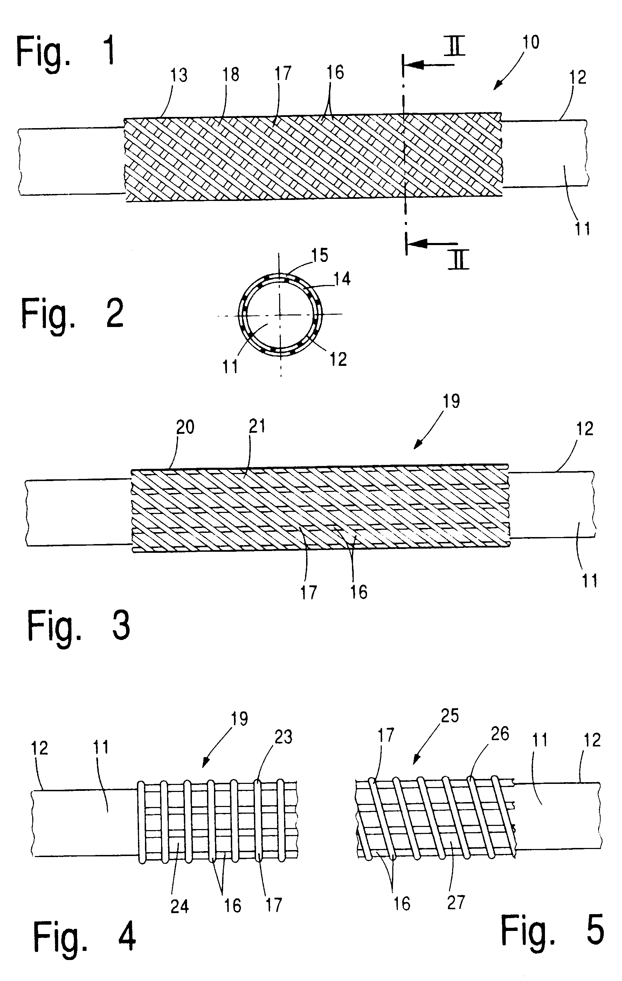

Ein in Fig. 1 und 2 dargestellter Riemen 10 zum Transport von Stückgütern weist einen Grundkörper 11 mit einer glatten Mantelfläche 12 auf, die von einem eine Profilierung bildenden, separaten Hüllkörper 13 umgeben ist. Der Hüllkörper 13 umgibt den Grundkörper 11 dabei stets vollständig in Umfangs- und Längsrichtung. In Fig. 1 ist der Aufbau des Riemens 10 erkennbar, wobei der als Endlosriemen ausgebildete Riemen 10 abschnittweise derart dargestellt ist, daß dessen Grundkörper 11 (aus Gründen der besseren Darstellbarkeit) zu beiden Seiten nur bereichsweise dargestellten Hüllkörpers 12 herausragt.

Der Grundkörper 11 ist aus einem Elastomer, insbesondere Kunststoff, gebildet. Die Härte des Elastomers bzw. Kunststoffes ist so gewählt, daß der Grundkörper 11 eine hohe Zugfestigkeit aufweist. Es ist auch zur Erhöhung der Zugfestigkeit möglich, den Grundkörper 11 mit Verstärkungseinlagen, beispielsweise in Form eines Stahlseils, zu versehen.

Der Hüllkörper 13 ist als Netzschlauch ausgebildet und weist zwei Lagen 14, 15 aus jeweils einer Mehrzahl von vorzugweise gleichen Strängen 16 auf. Durch die Aufteilung der Stränge 16 auf unterschiedliche Lagen 14 und 15 liegen die Stränge 16 der einen Lage in einer anderen Ebene als die Stränge 16 der anderen Lage 15, wobei sich die Stränge der unterschiedlichen Lagen 14, 15 bereichsweise berühren. Die Stränge 16 der jeweiligen Lagen 14, 15 verlaufen parallel zueinander und wendelförmig, wobei die Stränge 16 der inneren Lage 14 gegenläufig wendelförmig zu denen der äußeren Lage 15 angeordnet sind. Wegen der gegenläufigen Ausrichtung der Stränge 16 kommt es zu einer Vielzahl von Kreuzungsstellen 17 derselben, an denen die Stränge 16 der inneren Lage 14 mit denen der äußeren Lage 15 verbunden sind. Wegen der zahlreichen Kreuzungsstellen 17 der Stränge 16 weist der Hüllkörper 13 eine gute Formstabilität auf, die zum einen die Montage des Hüllkörpers 13 auf dem Grundkörper 11 erleichtert und zum anderen die Struktur der Profilierung sichert, indem sich die Stränge 16 nicht gegenseitig verschieben können.

Beim Riemen 10 haben die Stränge 16, abgesehen von dem gegenläufigen Verlauf in den benachbarten Lagen 14, 15, die gleiche Steigung und innerhalb der jeweiligen Lage 14, 15 auch stets gleichen gegenseitigen Abstand. Vorzugsweise sind die Abstände der Stränge 16 in jeder der beiden Lagen 14, 15 gleich. Dadurch erhält der Hüllkörper 13 gleichmäßige Ausnehmungen 18 in Form gleichseitiger Parallelogramme. Die derartig symmetrisch angeordneten Stränge 16 verleihen dem Hüllkörper 13 eine Profilierung hoher Formstabilität.

Der Hüllkörper 13 bzw. die Stränge 16 sind aus elastomeren Material gebildet, das andere physikalische Eigenschaften aufweist als das Material des Grundkörpers 11. Vorzugsweise ist das Material des Hüllkörpers 13 weicher als das des Grundkörpers 11. Der Hüllkörper 13 weist dadurch einerseits gegenüber dem Grundkörper 11 und andererseits gegenüber dem zu transportierenden Stückgut wie auch der antreibenden Riemenscheibe einen hohen Reibwiderstand auf, was die Übertragung großer Kräfte begünstigt. Eine Relativbewegung zwischen dem Grundkörper 11 und dem Hüllkörper 13 wird zusätzlich durch den erhöhten Reibwiderstand des Hüllkörpers 13 verringert. Um Relativbewegungen zwischen dem Hüllkörper 13 und dem Grundkörper 11 auszuschließen, ist der Hüllkörper 13 mit elastischer Vorspannung auf dem Grundkörper 11 angeordnet. Dazu verfügt der Hüllkörper 13 über einen geringfügig kleineren Innendurchmesser gegenüber dem Außendurchmesser des Grundkörpers 11. Es ist aber auch denkbar, den Hüllkörper 13 mit den Grundkörper 11 fest zu verbinden. Diese Verbindung erfolgt durch die Stränge 16 der inneren Lage 14, und zwar vorzugsweise auf thermischen Wege. Bei einer solchen Verbindung zwischen dem Hüllkörper 13 und dem Grundkörper 11 kann ggf. auch eine elastische Vorspannung des Hüllkörpers 13 auf den Grundkörper 13 verzichtet werden.

Die Eigenschaften des Riemens 10 werden neben der Materialauswahl für den Hüllkörper 13 bzw. dessen Stränge 16 zusätzlich auch dadurch bestimmt, wie die Stränge 16 zueinander angeordnet sind, wie also die Profilierung des Hüllkörpers 13 bzw. Riemens 10 ausgebildet ist und welchen Querschnitt die Stränge 16 aufweisen. In Abhängigkeit von der jeweiligen Aufgabenstellung sind die vielfältigsten Modifikationen möglich. So kann der Querschnitt der Stränge 16 beispielsweise dreieck-, kreis-, elipsen- oder rechteckförmig sein, wobei der Querschnitt aller Stränge 16 sowohl der äußeren Lage 15 als auch der inneren Lage 14 etwa gleich ist.

Die Ausnehmungen 18, die durch die sich in den zwei Lagen 14, 15 kreuzenden Stränge 16 gebildet sind, gestatten nicht nur die Ausbildung einer wirkungsvollen Profilierung des Hüllkörpers 13 bzw. des Riemens 10. Ihnen kann eine zusätzliche Bedeutung bei der Kraftübertragung zukommen, dann nämlich, wenn die Ausnehmungen 18 des Hüllkörpers 13 mit einer korrespondierenden Profilierung der antreibenden Riemenscheibe und/oder des Stückguts zusammenwirken und somit zusätzlich eine formschlüssige Kraftübertragung ermöglichen.

Weitere Gestaltungen der Profilierung und damit einhergehende veränderte Ausbildungen der Ausnehmungen 18, die aus den jeweiligen Verlauf der Stränge 16 resultieren, sind in den nachfolgenden Ausführungsbeispielen aufgeführt:

Ein in Fig. 3 dargestellter Riemen 19 weist bei gleichem Grundkörper 11 einen anderen Hüllkörper 20 auf. Die Stränge 16 in der inneren Lage 14 verlaufen in Axialrichtung des Hüllkörpers 20 und sind mit gleichmäßigem Abstand parallel angeordnet. Die Stränge 16 in der äußeren Lage 15 dagegen verlaufen wendelförmig, analog den Strängen 16 in der Lage 15 des zuvor beschriebenen Riemens 10. Auch hier weisen die Stränge 16 der inneren Lage 14 mit denen der äußeren Lage 15 eine Vielzahl der Kreuzungsstellen 17 auf, an denen die Stränge 16 miteinander verbunden sind.

Wegen der sich kreuzenden Stränge 16, die in den beiden Lagen 14, 15 wiederum den gleichen seitlichen Abstand zueinander aufweisen, ist auch der Hüllkörper 20 mit in Form von gleichseitigen Parallelogrammen ausgebildeten Ausnehmungen 21 versehen.

Die Form der Ausnehmungen 18, 21 ist stets davon abhängig, wie die Stränge 16 verlaufen, unter welchem Winkel sie sich kreuzen und wie sie innerhalb der jeweiligen Lage 14, 15 beabstandet sind.

Bei einem in Fig. 4 dargestellten Riemen 22 ist der Grundkörper 11 von einem Hüllkörper 23 umgeben, dessen Stränge 16 in der inneren Lage 14 ebenfalls in Axialrichtung des Hüllkörpers 23 bzw. Grundkörpers 11 verlaufen, während die Stränge 16 in der äußeren Lage 15 als quer zur Axialrichtung des Hüllkörpers 23 bzw. des Grundkörpers 11 verlaufende, kreisrunde Ringe ausgebildet sind, deren Längsmittelachsen auf der Längsachse des Grundkörpers 11 liegen. Die sich somit rechtwinklig kreuzenden Stränge 16 bilden rechteckförmige Ausnehmungen 24, die zudem quadratförmig sind, sofern die Abstände benachbarter Stränge 16 in den beiden Lagen 14, 15 gleich sind.

Ein in Fig. 5 dargestellter Riemen 25 unterscheidet sich von dem zuvor beschriebenen Riemen 22 dadurch, daß die Stränge 16 in der äußeren Lage 15 eines Hüllkörpers 26 zum Grundkörper 11 geneigt sind und somit als elliptische Ringe ausgebildet sind, deren Längsmittelachsen die Längsachse des Grundkörpers 11 unter einem Winkel schneiden. Ausnehmungen 27 des Hüllkörpers 26 sind wiederum als Parallelogramme ausgebildet.

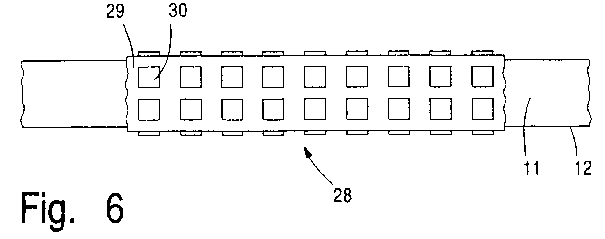

Schließlich weist ein Riemen 28 eines weiteren Ausführungsbeispiels der Erfindung (Fig. 6) einen als geschlossenen Schlauch ausgebildeten Hüllkörper 29 auf, der den Grundkörper 11 vollständig umgibt. Die Profilierung des Hüllkörpers 29 bzw. Riemens 28 ist durch Vorsprünge 30 gegeben, die sich von der Außenseite des Hüllkörpers 29 erheben. Die Vorsprünge 30 sind rechteckförmig ausgebildet und auf dem Hüllkörper 29 gleichförmig angeordnet. Sie können aber auch manigfaltige andere Gestaltungen aufweisen.

Nach einer weiteren, nicht dargestellten, Ausführungsform ist es ferner möglich, daß die Profilierung dadurch gebildet wird, daß anstelle der Vorsprünge 30 Vertiefungen vorgesehen sind, die ebenfalls entsprechend der jeweiligen Aufgabenstellung in unterschiedlichster Weise ausbildbar sind.

## Patentansprüche

1. Riemen mit einem eine glatte Mantelfläche (12) aufweisenden Grundkörper (11) und einer der Mantelfläche (12) zugeordneten Profilierung, die durch einen die Mantelfläche (12) des Grundkörpers (11) umgebenden Hüllkörper (13, 20, 23, 26, 29) gebildet ist, **dadurch gekennzeichnet,** daß der Hüllkörper (13, 20, 23, 26, 29) als separater Netzschlauch mit wenigstens zwei sich kreuzenden Strängen (16) ausgebildet ist.

2. Riemen nach Anspruch 1, dadurch gekennzeichnet, daß die Stränge (16) an vorzugsweise allen gemeinsamen Kreuzungsstellen (17) miteinander verbunden sind.

3. Riemen nach Anspruch 1 und 2, dadurch gekennzeichnet, daß die Stränge (16) in unterschiedlichen Lagen (14, 15) bzw. Ebenen angeordnet sind, wobei vorzugsweise die Stränge (16) der einen Lage (14, 15) sich mit den Strängen (16) der anderen Lage (14, 15) kreuzen.

4. Riemen nach einem oder mehreren der Ansprüche 1 bis 3, dadurch gekennzeichnet, daß die Stränge (16) in der jeweiligen Lage (14, 15) im wesentlichen parallel verlaufen.

5. Riemen nach einem oder mehreren der Ansprüche 1 bis 4, dadurch gekennzeichnet, daß alle Stränge (16) der jeweiligen Lage (14, 15) voneinander beabstandet sind.

6. Riemen nach einem oder mehreren der Ansprüche 1 bis 5, dadurch gekennzeichnet, daß die Stränge (16) der inneren Lage (14) in Axialrichtung des Grundkörpers (11) und die Stränge (16) in der äußeren Lage (15) quer zur Axialrichtung des Grundköpers (11) verlaufen.

7. Riemen nach einem oder mehreren der Ansprüche 1 bis 6, dadurch gekennzeichnet, daß die Stränge (16) mindestens einer der Lagen (14, 15), vorzugsweise beider Lagen, einen gleichförmigen Querschnitt aufweisen.

8. Riemen nach einem oder mehreren der Ansprüche 1 bis 7, dadurch gekennzeichnet, daß der Querschnitt der Stränge (16) dreieck-, kreis-, ellipsen- oder rechteckförmig ist.

9. Riemen nach einem oder mehreren der Ansprüche 1 bis 8, dadurch gekennzeichnet, daß der Hüllkörper (13, 20, 23, 26, 29) mindestens teilweise mit dem Grundkörper (11) verbunden ist.

10. Riemen nach einem oder mehreren der Ansprüche 1 bis 9, dadurch gekennzeichnet, daß der Innendurchmesser des Hüllkörpers (13, 20, 23, 26, 29) bzw. des Netzschlauchs geringfügig kleiner als der Außendurchmesser des Grundkörpers (11) ist.

11. Riemen nach einem oder mehreren der Ansprüche 1 bis 10, dadurch gekennzeichnet, daß der Hüllkörper (13, 20, 23, 26, 29) aus einem Material gebildet ist, das andere Eigenschaften als das Material des Grundkörpers (11) aufweist, insbesondere verfügt das Material des Hüllkörpers (13, 20, 23, 26, 29) über einen höheren Reibungswiderstand und/oder eine geringere Härte als das Material des Grundkörpers (11).

## Claims

1. Belt comprising a main body (11) having a smooth circumferential surface (12) and a profiling associated with the circumferential surface (12) and formed by an envelope body (13, 20, 23, 26, 29) which surrounds the circumferential surface (12) of the main body (11), characterized in that the envelope body (13, 20, 23, 26, 29) is formed as a separate netting tube having at least two intercrossing strands (16).

2. Belt according to Claim 1, characterized in that the strands (16) are joined to one another at preferably all of the common crossing points (17).

3. Belt according to Claims 1 and 2, characterized in that the strands (16) are arranged in different layers (14, 15) or planes, the strands (16) of the one layer (14, 15) preferably intercrossing with the strands (16) of the other layer (14, 15).

4. Belt according to one or more of Claims 1 to 3, characterized in that the strands (16) in the respective layer (14, 15) extend substantially parallel.

5. Belt according to one or more of Claims 1 to 4, characterized in that all the strands (16) of the respective layer (14, 15) are spaced apart.

6. Belt according to one or more of Claims 1 to 5, characterized in that the strands (16) of the inner layer (14) extend in the axial direction of the main body (11) and the strands (16) in the outer layer (15) extend transversely to the axial direction of the main body (11).

7. Belt according to one or more of Claims 1 to 6, characterized in that the strands (16) of at least one of the layers (14, 15), preferably of both layers, have a uniform cross section.

8. Belt according to one or more of Claims 1 to 7, characterized in that the cross section of the strands (16) is triangular, circular, elliptical or rectangular.

9. Belt according to one or more of Claims 1 to 8, characterized in that the envelope body (13, 20, 23, 26, 29) is at least partly joined to the main body (11).

10. Belt according to one or more of Claims 1 to 9, characterized in that the inside diameter of the envelope body (13, 20, 23, 26, 29) or of the netting tube is slightly smaller than the outside diameter of the main body (11).

11. Belt according to one or more of Claims 1 to 10, characterized in that the envelope body (13, 20, 23, 26, 29) is formed from a material which has different properties to the material of the main body (11), the material of the envelope body (13, 20, 23, 26, 29) in particular having a higher frictional resistance and/or a lower hardness than the material of the main body (11).

## Revendications

1. Courroie ayant un corps de base (11) présentant une surface latérale (12) lisse et un profilage associé à la surface latérale (12), profilage constitué par un corps enveloppe (13 ; 20, 23, 26, 29), entourant la surface latérale (12) du corps de base (11), caractérisée par le fait que le corps enveloppe (13, 20, 23, 26, 29) est réalisé sous forme de tuyau réticulaire séparé, ayant au moins deux brins (16) se croisant.

2. Courroie selon la revendication 1, caractérisée par le fait que les brins (16) sont reliés ensemble de préférence à tous les points de croisement (17) communs.

3. Courroie selon les revendications 1 et 2, caractérisée par le fait que les brins (16) sont disposés dans des couches (14, 15) ou plans différents, de préférence les brins (16) d'une première couche (14, 15) se croisant avec les brins (16) de l'autre couche (14, 15).

4. Courroie selon l'une ou plusieurs des revendications 1 à 3, caractérisée par le fait que tous les brins (16) courent sensiblement parallèlement dans la couche (14, 15) respective.

5. Courroie selon l'une ou plusieurs des revendications 1 à 4, caractérisée par le fait que tous les brins (16) de la couche (14, 15) respective sont espacés les uns des autres.

6. Courroie selon l'une ou plusieurs des revendications 1 à 5, caractérisée par le fait que les brins (16) de la couche intérieure (14) courent dans la direction axiale du corps de base (11) et les brins (16) se trouvant dans la couche extérieure (15) courent transversalement par rapport à la direction axiale du corps de base (11).

7. Courroie selon l'une ou plusieurs des revendications 1 à 6, caractérisée par le fait que les brins (16) d'au moins l'une des couches (14, 15), de préférence des deux couches, présentent une section transversale uniforme.

8. Courroie selon l'une ou plusieurs des revendications 1 à 7, caractérisée par le fait que la section transversale des brins (16) est de forme triangulaire, circulaire, elliptique ou rectangulaire.

9. Courroie selon l'une ou plusieurs des revendications 1 à 8, caractérisée par le fait que le corps enveloppe (13, 20, 23, 26, 29) est relié au moins partiellement au corps de base (11).

10. Courroie selon l'une ou plusieurs des revendications 1 à 9, caractérisée par le fait que le diamètre intérieur du corps enveloppe (13, 20, 23, 26, 29), du tuyau réticulaire, est légèrement inférieur au diamètre extérieur du corps de base (11).

11. Courroie selon l'une ou plusieurs des revendications 1 à 10, caractérisée par le fait que le corps enveloppe (13, 20, 23, 26, 29) est constitué d'un matériau présentant d'autres propriétés que celles du matériau du corps de base (11), en particulier le matériau du corps enveloppe (13, 20, 23, 26, 29) dispose d'une résistance au frottement plus élevée et/ou d'une dureté moindre que le matériau du corps de base (11).
